# FASCICULE DE BREVET EUROPEEN

(11) **EP 3 769 405 B1**
(45) Date de publication et mention de la délivrance du brevet: **08.01.2025**
(21) Numéro de dépôt: 19711393.9
(22) Date de dépôt: 22.03.2019
(51) Int. Cl.: H02K 3/52

(54) **DISPOSITIF DE CONNEXION ELECTRIQUE POUR MACHINE ELECTRIQUE TOURNANTE**
ELEKTRISCHE VERBINDUNGSVORRICHTUNG FÜR EINE DREHENDE ELEKTRISCHE MASCHINE
ELECTRIC CONNECTION DEVICE FOR A ROTARY ELECTRIC MACHINE

(30) Priorité: 23.03.2018 FR 1852508
(43) Date de publication de la demande: 27.01.2021
(73) Titulaire: Valeo Electrification, 95800 Cergy (FR)
(72) Inventeur: LEROY, Virginie, 94046 CRETEIL (FR); HANQUEZ, Michaël, 94046 CRETEIL (FR)
(74) Mandataire: Valeo Powertrain Systems
(86) Numéro de dépôt international: PCT/EP2019/057308
(87) Numéro de publication internationale: WO 2019/180240

(56) Documents cités:
- EP-A1- 2 677 634
- WO-A1-2016/170276
- US-A1- 2014 028 127

## Description

### DOMAINE TECHNIQUE DE L'INVENTION

Le domaine technique de l'invention est celui des machines électriques tournantes tels que les moteurs, les alternateurs et les alterno-démarreurs.

La présente invention concerne un dispositif de connexion électrique pour machines électriques tournantes. La présente invention concerne également une machine électrique tournante correspondante. L'invention trouve une application particulièrement avantageuse dans le domaine des alterno-démarreurs utilisés dans des systèmes dits "hybrides" destinés à participer à la propulsion des véhicules hybrides. Ces systèmes comportent à cet effet un moteur thermique entraînant mécaniquement en rotation la machine électrique en mode alternateur destiné à fournir, quand cela est nécessaire, de l'énergie électrique à des batteries d'alimentation ou encore la machine électrique peut, en mode moteur, participer à la propulsion du véhicule.

### ARRIERE-PLAN TECHNOLOGIQUE DE L'INVENTION

On connaît des machines électriques tournantes comportant un stator et un rotor solidaire d'un arbre dans lesquelles chaque bobine présente sur le stator est reliée à une source de courant par des câbles électriques constitués d'un matériau conducteur tel que le cuivre souvent entouré d'une enveloppe isolante.

Pour un moteur triphasé comportant trois phases U, V et W, il est connu d'utiliser un câble électrique à trois fils délivrant un courant triphasé puis, par l'intermédiaire d'un couplage étoile ou triangle, de relier chaque bobine ou chaque série de bobines par un câble à la phase correspondante. Ainsi, la première bobine, ou série de bobine, sera reliée à la phase U, la deuxième bobine, ou série de bobine, à la phase V et la troisième bobine, ou série de bobine, à la phase W.

Ces systèmes présentent l'inconvénient de devoir connecter, à l'aide de câbles électriques, toutes les bobines du stator, ce qui crée un encombrement. Cet encombrement rend difficile les opérations de soudage qui consistent habituellement en des soudures en forme de « V » réalisées sur chaque connecteur. Le montage constitue alors une étape longue et génératrice d'erreurs. De plus, ces systèmes ne permettent pas la standardisation des éléments conducteurs et isolants.

On connaît des systèmes de connexion électrique rigides de forme annulaire, tels que décrit dans la demande de brevet américain N° US 2008/0150377 (A1), qui comportent des connexions vers les bobines sur la périphérie externe uniquement ou, tels que décrit dans la demande de brevet européen N° EP 2 677 634 (A1), qui comportent des connexions sur la périphérie interne uniquement. Ces systèmes de connexion électrique comportent quatre anneaux conducteurs empilés axialement les uns sur les autres et isolés entre eux. Trois de ces anneaux sont destinés à être reliés aux trois phases U, V et W de la machine électrique tournante et un quatrième anneau est destiné à être relié au neutre de la machine. Ces systèmes électriques sont destinés à relier une machine électrique tournante à l'alimentation électrique par un couplage dit en étoile. Ces systèmes ne permettent pas la mise en place d'autres types de couplages et présentent un encombrement important dû aux multiples connexions disposées exclusivement sur une périphérie du système. Ces systèmes sont composés d'un assemblage de pièces dissemblables et par conséquent ne permettent pas non plus la standardisation.

Le brevet français FR 3 035 554 propose un système de connexion électrique comportant, comme dans les solutions précédemment présentées, plusieurs anneaux conducteurs empilés axialement les uns sur les autres et isolés entre eux mais chaque anneau est composé de deux éléments conducteurs, un premier élément conducteur disposé à la périphérie extérieure de l'anneau et possédant des connecteurs s'étendant en saillie vers l'extérieur de l'anneau et un second élément conducteur disposé à la périphérie intérieure de l'anneau et possédant des connecteurs s'étendant en saillie vers l'intérieur de l'anneau. Ainsi, les connexions sont disposées sur les deux périphéries du système ce qui contribue à réduire l'encombrement et le risque de proximité électrique par rapport aux solutions précédemment décrites tout en permettant un contrôle direct des phases d'une machine électrique tournante, notamment à l'aide d'un onduleur à double pont.

Par ailleurs, la demande US 2014/028127 A1 décrit un dispositif de connexion électrique comportant, plusieurs anneaux conducteurs empilés axialement les uns sur les autres et isolés entre eux, les anneaux présentant une forme ondulée formant des creux et des sommets dans le plan radial. Les anneaux sont configurés pour présenter des connecteurs s'étendant en saillie sur une périphérie intérieure ou respectivement sur une périphérie extérieure du dispositif de connexion électrique.

Cependant, le fait d'avoir des connexions sur la périphérie extérieure et la périphérie intérieure oblige à réduire la surface de l'anneau dans le plan radial ce qui entraîne une augmentation de la résistance et donc une réduction du courant dans l'anneau destiné à alimenter les bobines en mode moteur ou à recevoir par les bobines en mode alternateur, entraînant des risques de dysfonctionnement, et de l'échauffement par effet Joule. L'anneau dissipe alors moins bien la chaleur ce qui entraîne des risques de surchauffe.

Aucun des systèmes actuels ne permet de répondre simultanément à tous les besoins requis, à savoir de permettre un contrôle direct des phases électriques d'une machine électrique tournante avec un encombrement réduit tout en minimisant les risques de surchauffe et de dysfonctionnement.

### RESUME DE L'INVENTION

L'invention offre une solution aux problèmes évoqués précédemment, en proposant un dispositif de connexion électrique capable de contrôler les phases d'une machine électrique tournante et permettant d'éviter les dysfonctionnements et les surchauffes tout en présentant un faible encombrement.

Un premier aspect de l'invention concerne un dispositif de connexion électrique comportant :
- un organe de connexion interne entourant un axe X comportant une trace, une enveloppe isolante recouvrant au moins une surface radiale de la trace et une pluralité de connecteurs aptes à conduire un courant électrique raccordés électriquement à la trace ; et
- un premier organe de connexion externe entourant l'axe X et étant empilé axialement avec l'organe de connexion interne, le premier organe de connexion externe comportant une trace, une enveloppe isolante recouvrant au moins une surface radiale de la trace et une pluralité de connecteurs raccordés électriquement à la trace ;
le dispositif étant caractérisé en ce que chaque trace présente une forme ondulée formant des creux et des sommets dans le plan radial, les creux comprenant des creux internes situés en vis-à-vis de l'axe X et des creux externes situés sur une périphérie externe de la trace, chaque connecteur de l'organe de connexion interne étant raccordé électriquement dans un creux interne de la trace de l'organe de connexion interne et chaque connecteur du premier organe de connexion externe étant raccordé électriquement dans un creux externe de la trace du premier organe de connexion externe.

Grâce à l'invention, le dispositif peut établir une connexion électrique avec au moins une bobine dont l'entrée serait connectée à la trace de l'organe de connexion externe et la sortie à la trace de l'organe de connexion interne dont les connexions se font par le biais de connecteurs situés à la périphérie externe et à la périphérie interne du dispositif, ce qui réduit l'encombrement radial et/ou axial. La forme ondulée des traces permet en outre d'avoir des anneaux avec des surfaces radiales minimisant les risques de dysfonctionnement et de surchauffe, en exploitant les creux, en y plaçant les connecteurs. Les connecteurs sont ainsi suffisamment éloignés, car séparés d'un sommet, sans que la surface radiale des traces ait eu à être diminuée, tout en optimisant l'encombrement.

Outre les caractéristiques qui viennent d'être évoquées dans le paragraphe précédent, le dispositif selon un premier aspect de l'invention peut présenter une ou plusieurs caractéristiques complémentaires parmi les suivantes, considérées individuellement ou selon toutes les combinaisons techniquement possibles.

Avantageusement, le premier organe de connexion externe est empilé axialement sur l'organe de connexion interne.

Ainsi, le premier organe de connexion externe et l'organe de connexion interne sont empilés l'un sur l'autre, d'un même côté du stator.

Avantageusement, chaque trace présente une forme d'anneau ondulé.

Ainsi, le dispositif est adapté à la forme du stator d'une machine électrique tournante.

Avantageusement, les traces sont identiques.

Ainsi, les traces sont semblables et peuvent alors être fabriqués en série selon le même procédé industriel, en utilisant les mêmes moules et outillages. Avantageusement, chaque enveloppe isolante recouvre en outre au moins une surface axiale de la trace correspondante.

Ainsi, les traces sont isolées électriquement entre elles mais aussi isolées de l'extérieur.

Avantageusement, un connecteur comporte un crochet ou une languette.

Ainsi, le raccordement d'une bobine avec un fil torsadé est plus aisé via un crochet et le raccordement d'une bobine avec un soudage d'épingle est plus aisé via une languette.

Avantageusement, le crochet ou la languette d'un connecteur présente un décalage axial par rapport au creux dans lequel est raccordé électriquement le connecteur. Ainsi, le crochet ou la languette peut se trouver dans le creux d'une autre trace ce qui limite l'encombrement.

Avantageusement, le dispositif selon un premier mode de réalisation du premier aspect de l'invention comporte :
- un deuxième organe de connexion externe entourant l'axe X et étant empilé axialement avec le premier organe de connexion externe ;
- un troisième organe de connexion externe entourant l'axe X et étant empilé axialement avec le deuxième organe de connexion externe.

Ainsi, le dispositif peut établir une connexion électrique avec au moins trois ensembles de bobines ce qui lui permet d'être utilisé au sein d'une machine électrique tournante. Dans le cas d'un stator triphasé, l'empilement des trois traces des organes de connexion externe formant chacune une phase du stator permet de réaliser les trois phases du stator.

Avantageusement, le deuxième organe de connexion externe est empilé axialement sur le premier organe de connexion externe et le troisième organe de connexion externe est empilé axialement sur le deuxième organe de connexion externe. Ainsi, les trois organes de connexion externe sont empilés les uns sur les autres, d'un même côté du stator. L'organe de connexion interne peut dans ce cas être disposé de l'autre côté axial du stator ou du même axial côté du stator que les trois organes de connexion externe empilés. Dans ce dernier cas, par exemple, le deuxième organe de connexion externe est empilé axialement sur le premier organe de connexion externe, lui-même empilé sur l'organe de connexion interne et le troisième organe de connexion externe est empilé axialement sur le deuxième organe de connexion externe.

Ainsi, les trois organes de connexion externe et l'organe de connexion interne sont empilés les uns sur les autres, d'un même côté du stator.

Avantageusement, le dispositif selon un deuxième mode de réalisation du premier aspect de l'invention comporte :
- un deuxième organe de connexion interne entourant l'axe X et étant empilé axialement avec le premier organe de connexion interne ;
- un troisième organe de connexion interne entourant l'axe X et étant empilé axialement avec le deuxième organe de connexion interne.

Ainsi, le dispositif peut établir une connexion électrique avec au moins trois ensembles de bobines ce qui lui permet d'être utilisé au sein d'une machine électrique tournante. Dans le cas d'un stator triphasé, l'empilement des trois traces des organes de connexion interne formant chacune une phase du stator permet de réaliser les trois phases du stator.

Avantageusement, le deuxième organe de connexion interne est empilé axialement sur le premier organe de connexion interne et le troisième organe de connexion interne est empilé axialement sur le deuxième organe de connexion interne.

Ainsi, les premier, deuxième et troisième organes de connexion interne sont empilés les uns sur les autres, d'un même côté du stator.

Le premier organe de connexion externe peut dans ce cas être disposé de l'autre côté axial du stator ou du même côté axial du stator que les trois organes de connexion interne empilés axialement. Dans ce dernier cas, par exemple, le deuxième organe de connexion interne est empilé axialement sur le premier organe de connexion interne, lui-même empilé sur le premier organe de connexion externe et le troisième organe de connexion interne est empilé axialement sur le deuxième organe de connexion interne.

Ainsi, les trois organes de connexion internes et l'organe de connexion externe sont empilés les uns sur les autres, d'un même côté du stator.

Selon un troisième mode de réalisation non revendiqué l'organe de connexion interne comprend en outre des connecteurs externes raccordés électriquement chacun dans un creux externe et en ce que l'organe de connexion externe comprend en outre des connecteurs internes raccordés électriquement chacun dans un creux interne de la trace de l'organe de connexion interne.

Selon un exemple de ce troisième mode de réalisation, le dispositif comprend un deuxième organe de connexion externe ou un deuxième organe de connexion interne.

Ainsi, le dispositif peut établir une connexion électrique avec au moins trois ensembles de bobines ce qui lui permet d'être utilisé au sein d'une machine électrique tournante. Dans le cas d'un stator triphasé couplé en triangle, on a l'empilement des trois traces des organes de connexion interne et externe formant chacune une connexion de deux ensembles de bobines pour former une sortie de phase électrique du stator.

Avantageusement, les organes de connexion externe du premier mode de réalisation de l'invention ou les organes de connexion interne du deuxième mode de réalisation sont identiques.

Ainsi, les organes de connexion externe sont semblables et peuvent alors être fabriqués en série selon le même procédé industriel.

Avantageusement, les organes de connexion externe ou interne, selon le mode de réalisation, sont décalés angulairement les uns des autres de manière que chaque connecteur d'un organe de connexion externe ou interne respectivement se situe en vis-à-vis axialement des creux externes ou internes respectivement dépourvus de connecteurs des autres organes de connexion externe ou interne respectivement.

Ainsi, l'encombrement électrique et les risques de dysfonctionnement sont diminués.

Avantageusement, chaque organe de connexion externe ou interne selon le mode de réalisation comporte un connecteur de sortie destiné à être relié à un équipement électrique, par exemple un convertisseur, et les organes de connexion externe ou interne respectivement sont disposés les uns sur les autres avec un décalage angulaire de manière que les connecteurs de sortie soient écartés entre eux dudit décalage angulaire.

Ainsi, les connecteurs de la trace d'un premier organe de connexion externe ou interne selon le mode de réalisation et les connecteurs de la trace d'un second organe de connexion externe ou interne respectivement empilé sur la trace du premier organe de connexion externe ou interne respectivement sont décalés de manière à espacer les connecteurs. Dans cette configuration, l'accès aux connecteurs est facilité lors des opérations de soudure : l'encombrement physique et l'encombrement électrique sont donc réduits.

Un second aspect de l'invention concerne une machine électrique tournante, caractérisée en ce qu'elle comporte :
- un dispositif de connexion électrique décrit précédemment dans le premier aspect de l'invention comprenant au moins l'avantage d'avoir trois organes de connexion externe ou interne selon le mode de réalisation;
- un premier organe électrique triphasé comportant au moins une première, une deuxième et une troisième entrée de phase électrique ;
- un stator doté d'un bobinage polyphasé comportant au moins un premier, un deuxième et un troisième ensemble de bobines, chaque ensemble de bobines comprenant des bobines, chaque bobine comportant une entrée et une sortie,
et en ce que les traces du premier, deuxième et troisième organe de connexion externe ou interne est raccordée électriquement respectivement à la première, deuxième et troisième entrée de phase électrique et en ce que les premier, deuxième, troisième ensembles de bobines comprennent chacun au moins une bobine correspondante raccordée électriquement respectivement à la trace du premier, deuxième, troisième organe de connexion externe ou interne par le biais d'un connecteur externe ou interne respectivement.

Ainsi, le dispositif selon le premier aspect de l'invention peut est utilisé au sein d'une machine électrique tournante triphasé pouvant présenter un couplage en étoile ou un couplage en triangle.

Selon un exemple du premier mode de réalisation du dispositif, les premier, deuxième et troisième ensembles de bobines comprennent chacun au moins une bobine correspondante ayant son entrée raccordée électriquement respectivement à la trace du premier, deuxième et troisième organe de connexion externe et la sortie d'au moins une bobine de chaque ensemble de bobines est raccordée électriquement à la trace de l'organe de connexion interne par le biais d'un connecteur de l'organe de connexion interne.

Ainsi, le dispositif selon un premier aspect de l'invention est utilisé au sein d'une machine électrique tournante triphasé présentant un couplage en étoile.

Selon un exemple du deuxième mode de réalisation du dispositif, les premier, deuxième et troisième ensembles de bobines comprennent chacun au moins une bobine correspondante ayant sa sortie raccordée électriquement respectivement à la trace du premier, deuxième et troisième organe de connexion interne et l'entrée d'au moins une bobine de chaque ensemble de bobines est raccordée électriquement à la trace de l'organe de connexion externe par le biais d'un connecteur de l'organe de connexion externe.

Ainsi, le dispositif selon le premier aspect de l'invention peut être utilisé au sein d'une machine électrique tournante triphasé présentant un couplage en étoile.

Selon un autre exemple du troisième mode de réalisation du dispositif, le dispositif comporte au moins un deuxième organe de connexion externe et les deux organes de connexion externes comprennent en outre des connecteurs raccordés électriquement dans un creux interne de la trace correspondante et en ce que l'organe de connexion interne comprend en outre des connecteurs raccordés électriquement dans un creux externe de la trace du premier organe de connexion externe et en ce que les entrées de chaque bobine du premier, deuxième et troisième ensemble de bobines sont raccordées électriquement aux connecteurs dans les creux internes respectivement de la trace du premier et du deuxième organe de connexion externe et de l'organe de connexion interne et les sorties de chaque bobine du premier, deuxième et troisième ensemble de bobines sont raccordées électriquement aux connecteurs raccordés dans les creux externes respectivement de la trace du deuxième organe de connexion externe, de l'organe de connexion interne et du premier organe de connexion externe.

Ainsi, le dispositif selon le premier aspect de l'invention est utilisé au sein d'une machine électrique tournante triphasé présentant un couplage en triangle.

Par entrée d'une bobine, on entend l'extrémité du cable ou fil conducteur de la bobine le plus éloigné de l'axe du stator et par sortie d'une bobine, on entend l'autre extrémité du cable ou fil conducteur de la bobine le plus proche de l'axe du stator.

Avantageusement, les organes de connexion externe et l'organe de connexion interne peuvent avoir plusieurs traces dans le même plan pour permettre de raccorder des bobines d'un ensemble en série.

Par exemple, chaque trace peut comporter des marques de découpe. Cela permet que les traces proviennent d'une seule trace découpée pour former une pluralité de traces.

Avantageusement, l'entrée de la bobine comprend une portion de câble, parallèle à l'axe X, située dans le creux dans lequel est raccordé électriquement le connecteur correspondant.

Ainsi, l'encombrement généré par les câbles électriques permettant la connexion des bobines au stator est diminué.

Avantageusement, l'organe électrique triphasé comporte en outre un convertisseur réalisant la fonction de redresseur-onduleur, ledit convertisseur comportant un premier, un deuxième et un troisième port, respectivement relié électriquement chacun à la trace du premier, deuxième et troisième organe de connexion externe ou interne selon le mode de réalisation, par le biais respectivement de la première, deuxième et troisième entrée de phase.

Avantageusement, chacune des entrées de phase est reliée électriquement à la trace correspondante par le biais du connecteur de sortie de l'organe de connexion externe ou interne correspondant selon le mode de réalisation.

Ainsi, l'utilisation du convertisseur permet de faire marcher la machine en mode alternateur avec la fonction redresseur ou en mode alternateur avec la fonction onduleur.

Avantageusement, selon les modes de réalisation, la trace de l'organe de connexion interne ou externe est raccordée électriquement au stator.

Ainsi, le neutre est raccordé directement à la culasse permettant de diminuer une connexion entre le dispositif de connexion électrique et l'organe électrique triphasé.

Avantageusement, la machine électrique tournante selon un second aspect de l'invention comporte un rotor comportant un diamètre externe, les connecteurs de chaque trace à connexion interne étant situés à l'extérieur du diamètre externe du rotor.

Ainsi, le rotor peut être monté par les deux côtés axiaux du stator et le rotor peut être plus long axialement en dépassant et en étant entouré par le dispositif de connexion électrique.

Avantageusement, la machine électrique tournante selon un second aspect de l'invention comporte en outre un quatrième, un cinquième et un sixième organe de connexion externe ou interne empilés axialement avec le premier, deuxième et troisième organe de connexion externe ou interne selon le modes de réalisation, et en ce qu'elle comporte en outre un deuxième organe électrique triphasé relié électriquement à la trace du quatrième, cinquième et sixième organe de connexion externe.

Ainsi, on obtient une machine électrique tournante avec six phases électriques.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1a montre une représentation schématique d'un mode de réalisation d'un organe de connexion interne selon une vue en perspective.
- La figure 1b montre une représentation schématique de l'organe de connexion interne de la figure 1a selon une vue axiale.
- La figure 2a montre une représentation schématique d'un mode de réalisation d'un organe de connexion externe selon une vue en perspective.
- La figure 2b montre une représentation schématique de l'organe de connexion externe de la figure 2a selon une vue axiale.
- La figure 3a montre une représentation schématique d'un dispositif selon un mode de réalisation comportant l'organe de connexion interne de la figure 1a et trois organes de connexion externe empilés axialement selon une vue en perspective.
- La figure 3b montre une représentation schématique du dispositif selon la figure 3a selon une vue axiale.
- La figure 4a montre une représentation schématique d'un stator et d'un dispositif selon un mode de réalisation comportant le dispositif de la figure 3a selon une vue en perspective.
- La figure 4b montre un agrandissement d'une portion du stator et du dispositif de la figure 4a.

### DESCRIPTION DETAILLEE D'AU MOINS UN MODE DE REALISATION DE L'INVENTION

Sauf précision contraire, un même élément apparaissant sur des figures différentes présente une référence unique.

Un premier aspect de l'invention concerne un dispositif de connexion électrique destiné à être utilisé au sein d'une machine électrique tournante dans le but de la relier au système d'alimentation électrique. On entend par machine électrique tournante, une machine comportant un stator et un rotor, pouvant fonctionner selon au moins l'un des deux modes suivants : un mode alternateur dans lequel la machine produit de l'énergie électrique et un mode moteur dans lequel la machine produit de l'énergie mécanique correspondant à un couple.

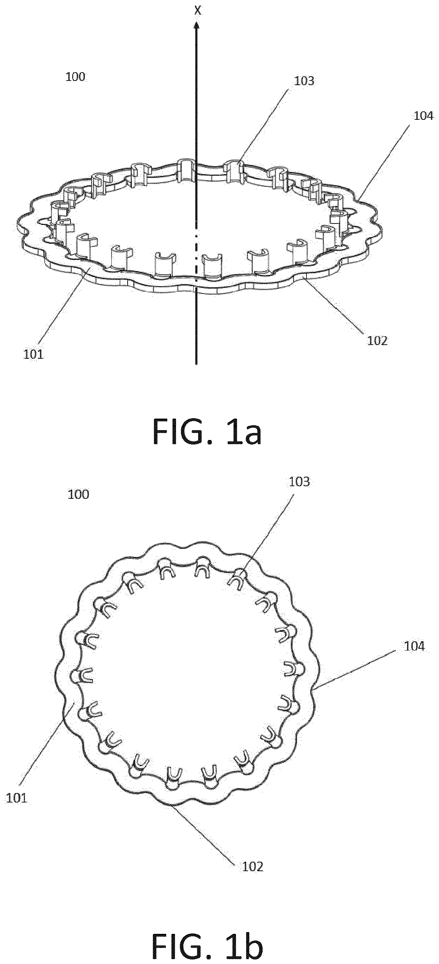

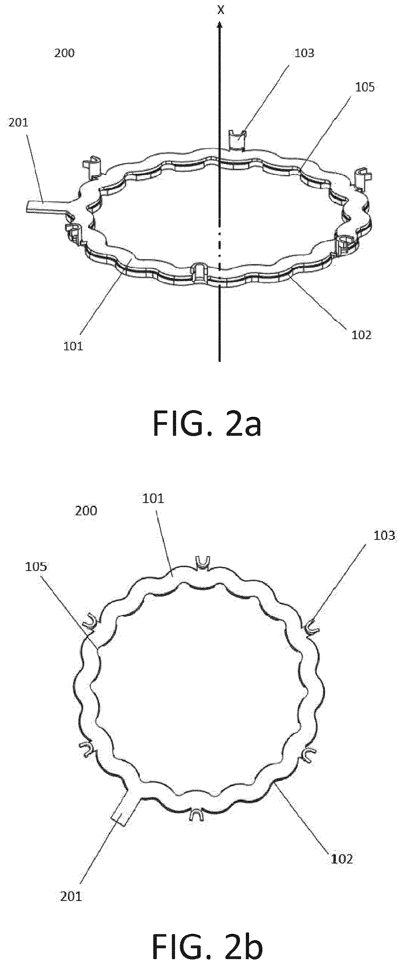

Le dispositif selon le premier aspect de l'invention comporte un organe de connexion interne 100 représenté aux figures 1a et 1b et un premier organe de connexion externe 200 représenté aux figures 2a et 2b.

Comme représenté sur les figures 1a et 1b, l'organe de connexion interne 100 comporte une trace 101 présentant une forme d'anneau entourant un axe X. Cet anneau présente des ondulations dans son plan radial, présentant des sommets et des creux 104, 105 sur sa périphérie intérieure, vers l'axe X et sur sa périphérie extérieure, vers l'extérieur. En l'occurrence, les creux 104, 105 sont identiques et les sommets sont identiques. Dans les creux de la périphérie intérieure ou creux internes 105 de la trace 101 de l'organe à connexion interne 100, des connecteurs 103 sont raccordés électriquement à la trace 101 de l'organe à connexion interne 100.

Comme représenté sur les figures 2a et 2b, l'organe de connexion externe 200 comporte une trace 101 présentant une forme d'anneau ondulé, entourant un axe X. En l'occurrence, la trace 101 de l'organe de connexion interne et la trace 101 de l'organe de connexion externe sont identiques. Dans les creux de la périphérie externe ou creux externes 104 de la trace 101 de l'organe de connexion externe 200, des connecteurs 103 sont raccordés électriquement à la trace 101 de l'organe de connexion externe 200.

L'organe de connexion externe 200 est empilé axialement avec l'organe de connexion interne 100 selon l'axe X, ce qui n'est pas représenté aux figures 1a, 1b, 2a et 2b. Dans la présente demande, on entend par un premier élément est empilé avec un second élément que le premier élément et le second élément se trouve dans une même pile, par opposition avec un premier élément est empilé sur un second élément qui précise que les premier et second éléments sont disposés l'un sur l'autre dans une même pile. Ainsi, au sein d'une machine électrique tournante, l'organe de connexion externe 200 est, par exemple, séparé de l'organe de connexion interne 100 par le stator de la machine électrique tournante, c'est-à-dire que l'organe de connexion externe 200 est d'un côté axial du stator et que l'organe de connexion interne 100 est de l'autre côté axial du stator.

En l'occurrence, l'organe de connexion externe 200 est empilé sur l'organe de connexion interne 100. Ainsi, au sein d'une machine électrique tournante, l'organe de connexion externe 200 et l'organe de connexion interne 100 se trouve du même côté du stator.

Chaque trace 101 est recouverte d'une enveloppe isolante 102 sur au moins une de ses surfaces radiales pour permettre l'isolation électrique entre les traces 101 empilées. Ainsi, la trace 101 de l'organe de connexion interne 100 et la trace 101 de l'organe de connexion externe sont chacune recouverte partiellement d'une enveloppe isolante 102.

L'enveloppe isolante est formée d'une matière isolante comme, par exemple une matière plastique. La matière plastique est, par exemple, du polypropylène plus particulièrement du PPs (Acronyme de polypropène syndiotactique) ou du PPa (Acronyme de polypropylène alvéolaire). En l'occurrence, l'enveloppe isolante 102 recouvre également au moins une surface axiale de la trace 100 permettant son isolation électrique avec l'extérieur. Sur la figure 1a et 1b, l'enveloppe isolante 102 recouvre l'intégralité d'une surface axiale de la périphérie externe et partiellement une surface axiale de la périphérie interne de la trace 101. En particulier, l'enveloppe isolante recouvre la partie des sommets de la périphérie interne de la trace 101.

Sur la figure 2a et 2b, l' enveloppe isolante 102 recouvre l'intégralité d'une surface axiale de la périphérie interne et partiellement une surface axiale de la périphérie externe de la trace 101. En particulier, l'enveloppe isolante recouvre la partie des sommets de la périphérie externe de la trace 101.

Les traces 101 sont formés d'un matériau conducteur. Par exemple, les traces 101 sont formés d'une fine plaque de cuivre, d'acier ou d'aluminium.

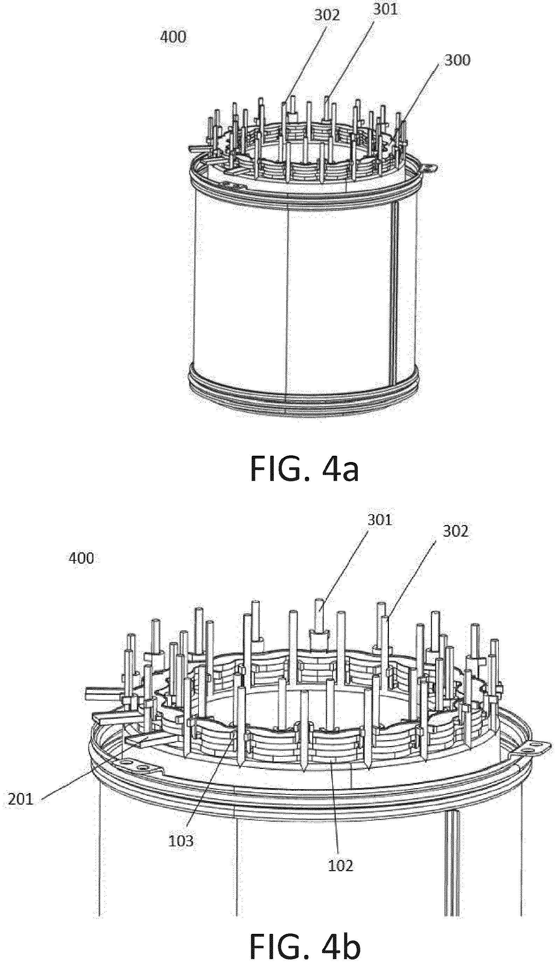

Les connecteurs 103 sont par exemple formés de cuivre, d'acier ou d'aluminium. Les connecteurs 103 sont destinés à être connecté à l'entrée 301 ou à la sortie 302 d'une bobine, comme représenté sur les figures 4a et 4b.

L'entrée 301 d'une bobine et la sortie 302 d'une bobine comprennent chacune une portion de câble, un câble comportant au moins un fil électrique. En l'occurrence, chaque connecteur 103 comporte un crochet ou une languette, le crochet étant particulièrement adapté au cas où le câble comporte un ou plusieurs fils torsadés et la languette au cas où le câble est soudé grâce à un soudage d'épingle. Les crochets ou languettes sont par exemple, en cuivre, en acier ou en aluminium. En l'occurrence, les crochets ou languettes sont dans le même matériau que les traces. En l'occurrence, chaque crochet ou chaque languette d'un connecteur 103 est décalé axialement par rapport au creux 104, 105 dans lequel est raccordé le connecteur 103. Ainsi, le connecteur 103 d'une trace 101 peut se retrouver dans le creux 104, 105 d'une autre trace 101.

En l'occurrence, chaque creux interne 105 de la trace 101 de l'organe de connexion interne 100 est raccordé à un connecteur 103, comme représenté sur les figures 1a et 1b.

En l'occurrence, l'organe de connexion externe 200 comporte un connecteur de sortie 201, représenté sur la figure 2a. Le connecteur de sortie 201 est de forme allongée orientée vers l'extérieur de manière à pouvoir être connecté à un équipement électrique, comme par exemple un convertisseur ou une source d'alimentation.

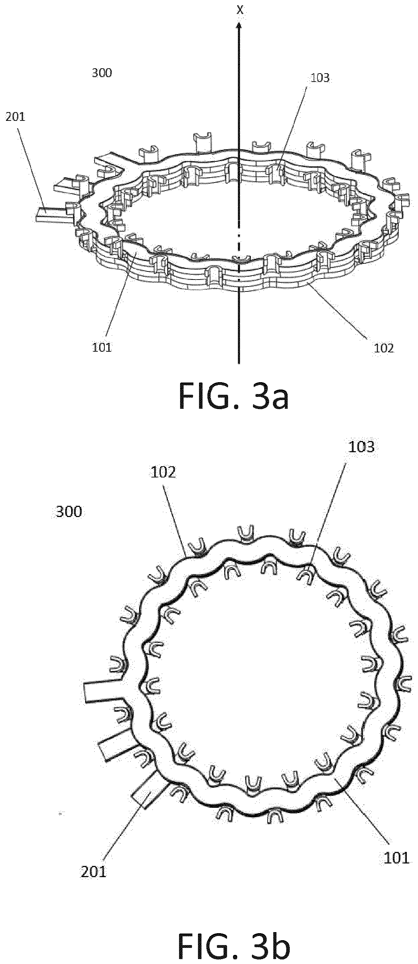

Selon un mode de réalisation, un deuxième organe de connexion externe 200 est empilé axialement avec le premier organe de connexion externe 200, lui-même empilé avec l'organe de connexion interne 100 et un troisième organe de connexion externe 200 est empilé axialement avec le deuxième organe de connexion externe 200 pour former un dispositif 300 de connexion électrique représenté aux figures 3a et 3b.

En l'occurrence, le deuxième organe de connexion externe 200 est empilé axialement sur le premier organe de connexion externe 200 et le troisième organe de connexion externe 200 est empilé axialement sur le deuxième organe de connexion externe 200.

Ainsi, au sein d'une machine électrique tournante, les trois organes de connexion externe 200 sont disposés d'un même côté du stator.

En l'occurrence, le deuxième organe de connexion externe 200 est empilé axialement sur le premier organe de connexion externe 200, lui-même empilé sur l'organe de connexion interne 100 et le troisième organe de connexion externe 200 est empilé axialement sur le deuxième organe de connexion externe 200.

Ainsi, au sein d'une machine électrique tournante, les trois organes de connexion externe 200 et l'organe de connexion interne 100 sont disposés d'un même côté du stator.

En l'occurrence, les premier, deuxième et troisième organes de connexion externe 200 sont identiques de sorte à réduire les coûts de production. En l'occurrence, les organes de connexion externe 200 sont empilés avec un décalage angulaire de manière que leurs connecteurs de sortie 201 soient écartés entre eux dudit décalage angulaire pour faciliter la saillie des connecteurs de sortie 201. Ainsi, le montage est facilité et les risques d'interactions électriques entre connecteurs de sortie 201 sont réduits. En l'occurrence, les organes de connexion externe sont empilés entre eux de sorte que les sommets et les creux 104, 105 de leurs traces 101 soient alignés.

En l'occurrence, les connecteurs 103 sont répartis de manière que deux connecteurs 103 ne soient pas disposés selon un même axe parallèle à l'axe X et que chaque crochet ou languette d'un connecteur 103 puisse se retrouver dans le creux externe 104 d'un autre organe de connexion externe 200.

Ainsi, comme le dispositif 300 présente trois organes de connexion externe 200, chaque organe de connexion externe 200 présente un connecteur 103 dans seulement un creux externe 104 sur trois, comme représenté à la figure 2a. Chaque connecteur 103 est alors placé avantageusement pour pouvoir être connecté à une bobine. En l'occurrence, le connecteur 103 de la périphérie intérieure et le connecteur 103 de la périphérie extérieure destinés à connecter une même bobine sont décalés angulairement correspondant à une largeur de bobine.

Les caractéristiques des organes de connexion externe 200 sont valables quel que soit le nombre d'organes de connexion externe 200 dans le dispositif de connexion électrique. Par exemple, si le dispositif de connexion électrique comporte cinq organes de connexion externe 200, chaque organe de connexion externe 200 présente un connecteur 103 dans seulement un creux externe 104 sur cinq.

Le dispositif 300 peut être utilisé dans une machine électrique tournante triphasée pour permettre un contrôle direct des phases électriques de la machine électrique tournante. Pour cela, la machine électrique tournante comporte un organe électrique triphasé comportant au moins trois entrées de phases électriques, chacune étant raccordée électriquement à une trace 101 d'un des trois organes de connexion externe 200 de manière que chaque trace 101 du dispositif 300 soit raccordée à une entrée de phase électrique différente. En l'occurrence, le raccordement entre une trace 101 d'un organe de connexion externe 200 et une entrée de phase électrique se fait via le connecteur de sortie 201 de l'organe de connexion externe 200. En l'occurrence, l'organe électrique triphasé comporte un convertisseur réalisant la fonction de redresseur-onduleur, comportant trois ports, chacun étant relié à une trace 101 d'un des trois organes de connexion externe 200 par le biais de l'entrée de phase électrique correspondante.

La machine électrique tournante comporte également un stator 400. Le stator 400, représenté à la figure 4a, comporte une enveloppe de fer pouvant être un paquet de tôle ou une culasse, présentant des rainures dans lesquelles se trouve un bobinage polyphasé comportant au moins trois ensembles de bobines. Un ensemble de bobines comporte au moins une bobine, chacune ayant une entrée 301 et une sortie 302. Les bobines d'un même ensemble de bobines sont connectées en parallèle. Chaque bobine est raccordée électriquement à une trace 101 d'un organe de connexion externe 200 via son entrée 301, par le biais d'un connecteur 103 de la trace 101. Cette configuration permet, par la suite, la mise en place d'un couplage triangle ou d'un couplage étoile.

Selon un mode de réalisation, chaque bobine est raccordée électriquement à la trace 101 de l'organe de connexion interne 100 via sa sortie 302, par le biais d'un connecteur de la trace 101 de l'organe de connexion interne 100. Ainsi, la machine électrique triphasé comporte un couplage en étoile.

En l'occurrence, la trace 101 de l'organe de connexion interne 100 est raccordé électriquement au stator 400.

En l'occurrence, la portion de câble composant l'entrée 301 de chaque bobine est parallèle à l'axe X, située dans le creux 104, 105 dans lequel est raccordé électriquement le connecteur 103 correspondant. Ainsi, l'encombrement électrique est diminué.

La machine électrique tournante comporte également un rotor comportant un diamètre externe. En l'occurrence, les connecteurs 103 de l'organe de connexion interne 100 sont situés à l'extérieur du diamètre externe du rotor. Ainsi, le rotor peut être monté par les deux côtés axiaux du stator 400 permettant au rotor d'être plus long axialement en dépassant et d'être entouré par le dispositif 300.

Selon un autre mode de réalisation la machine électrique tournante comporte un deuxième organe électrique triphasé et trois organes de connexion externe 200 empilés axialement entre eux sont empilés sur le dispositif 300. Il est alors possible de réaliser, par exemple, un couplage en étoile avec six phases électriques. Selon un autre mode de réalisation non représenté on peut bien entendu inverser les organes de connexion externe en organe de connexion interne et l'organe de connexion interne en organe de connexion externe. Dans ce cas, il y a donc trois organes de connexion interne comprenant chacun un connecteur de sortie pour être relié à un port d'un redresseur onduleur et l'organe de connexion externe est relié à la masse.

En outre, il est possible, que ce soit pour un stator d'une machine triphasé ou un stator d'une machine double triphasé, de disposer un ou des organes de connexion interne ou externe de l'autre côté axial du stator. De préférence, on disposera l'organe de connexion ayant sa trace connectée au stator d'un côté et les trois organes de connexion de l'autre côté. Cela permet de diminuer l'encombrement axial d'un côté du stator et d'avoir les trois connecteurs de sortie du même côté.
Selon un autre mode de réalisation non représenté et non revendiqué le stator peut comprendre trois organes de connexion comprenant chacun des traces ondulées identiques, chacun des organes de connexion comprenant des connecteurs externes et des connecteurs internes raccordés respectivement électriquement dans les creux externes et les creux internes de leur trace correspondante.

Le stator peut ainsi avoir une connexion en triangle des ensembles de bobines. Chaque bobine des ensembles de bobines comprend une sortie reliée à un connecteur interne d'un organe de connexion et une entrée reliée à un connecteur externe d'un autre organe de connexion.

Le dispositif peut établir une connexion électrique avec au moins trois ensembles de bobines ce qui lui permet d'être utilisé au sein d'une machine électrique tournante. Dans le cas d'un stator triphasé, l'empilement des trois traces des organes de connexion interne formant chacune une phase électrique de la machine électrique tournante.

## Revendications

1. Dispositif de connexion électrique comportant :
• un organe de connexion interne (100) entourant un axe X comportant une trace (101), une enveloppe isolante (102) recouvrant au moins une surface radiale de la trace (101) et une pluralité de connecteurs (103) aptes à conduire un courant électrique raccordés électriquement à la trace (101) ; et
• un premier organe de connexion externe (200) entourant l'axe X et étant empilé axialement avec l'organe de connexion interne (100), le premier organe de connexion externe (200) comportant une trace (101), une enveloppe isolante (102) recouvrant au moins une surface radiale de la trace (101) et une pluralité de connecteurs (103) raccordés électriquement à la trace (101),
chaque trace (101) présentant une forme ondulée formant des creux (104, 105) et des sommets dans le plan radial, les creux (104, 105) comprenant des creux internes (105) situés en vis-à-vis de l'axe X et des creux externes (104) situés sur une périphérie externe de la trace (101), le dispositif étant **caractérisé en ce que** chaque connecteur (103) de l'organe de connexion interne (100) est raccordé électriquement dans un creux interne (105) de la trace (101) de l'organe de connexion interne (100) et chaque connecteur (103) du premier organe de connexion externe (200) est raccordé électriquement dans un creux externe (104) de la trace (101) du premier organe de connexion externe (200).

2. Dispositif selon la revendication 1, **caractérisé en ce que** chaque trace (101) présente une forme d'anneau ondulé.

3. Dispositif selon l'une quelconque des revendications précédentes, **caractérisé en ce que** les traces (101) sont identiques.

4. Dispositif (300) selon l'une quelconque des revendications précédentes, **caractérisé en ce qu'**il comporte :
• un deuxième organe de connexion externe (200) entourant l'axe X et étant empilé axialement avec le premier organe de connexion externe (200) ;
• un troisième organe de connexion externe (200) entourant l'axe X et étant empilé axialement avec le deuxième organe de connexion externe (200).

5. Dispositif (300) selon la revendication 4, **caractérisé en ce que** les organes de connexion externe (200) sont identiques et décalés angulairement les uns des autres de manière que chaque connecteur (103) d'un organe de connexion externe (200) se situe en vis-à-vis axialement des creux externes (104) dépourvus de connecteurs (103) des autres organes de connexion externe (200).

6. Dispositif (300) selon la revendication 4 ou 5, **caractérisé en ce que** chaque organe de connexion externe (200) comporte un connecteur de sortie (201) destiné à être relié à un équipement électrique, par exemple un convertisseur, et les organes de connexion externe (200) sont disposés les uns sur les autres avec un décalage angulaire de manière que les connecteurs de sortie (201) soient écartés entre eux dudit décalage angulaire.

7. Machine électrique tournante, **caractérisée en ce qu'**elle comporte :
• un dispositif (300) de connexion électrique selon l'une quelconque des revendications 4 à 6 ;
• un premier organe électrique triphasé comportant au moins une première, une deuxième et une troisième entrée de phase électrique ;
• un stator (400) doté d'un bobinage polyphasé comportant au moins un premier, un deuxième et un troisième ensemble de bobines, chaque ensemble de bobines comprenant des bobines, chaque bobine comportant une entrée (301) et une sortie (302),
et **en ce que** la trace (101) du premier, deuxième et troisième organe de connexion externe (200) est raccordée électriquement respectivement à la première, deuxième et troisième entrée de phase électrique et **en ce que** les premier, deuxième, troisième ensembles de bobines comprennent chacun au moins une bobine correspondante ayant son entrée raccordée électriquement respectivement à la trace (101) du premier, deuxième, troisième organe de connexion externe (200) par le biais d'un connecteur (103) de l'organe de connexion externe (200).

8. Machine électrique tournante selon la revendication 7, **caractérisée en ce que** la sortie (302) d'au moins une bobine de chaque ensemble de bobines est raccordée électriquement à la trace (101) de l'organe de connexion interne (100) par le biais d'un connecteur (103) de l'organe de connexion interne (100).

9. Machine électrique tournante selon la revendications 7 ou 8, **caractérisée en ce que** l'organe électrique triphasé comporte en outre un convertisseur réalisant la fonction de redresseur-onduleur, ledit convertisseur comportant un premier, un deuxième et un troisième port, respectivement relié électriquement chacun à la trace (101) du premier, deuxième et troisième organe de connexion externe (200) par le biais respectivement de la première, deuxième et troisième entrée de phase.

10. Machine électrique tournante selon l'une des revendications 7 à 9 et la revendication 6, **caractérisée en ce que** chacune des entrées de phase est reliée électriquement à la trace (101) correspondante par le biais du connecteur de sortie (201) de l'organe de connexion externe (200) correspondant.

## Patentansprüche

1. Elektrische Verbindungsvorrichtung, die aufweist:
• ein eine Achse X umgebendes inneres Verbindungselement (100), das eine Spur (101), eine mindestens eine radiale Fläche der Spur (101) bedeckende Isolierhülle (102) und eine Vielzahl von elektrisch an die Spur (101) angeschlossenen Verbindern (103) aufweist, die geeignet sind, einen elektrischen Strom zu leiten; und
• ein erstes äußeres Verbindungselement (200), das die Achse X umgibt und axial mit dem inneren Verbindungselement (100) gestapelt ist, wobei das erste äußere Verbindungselement (200) eine Spur (101), eine mindestens eine radiale Fläche der Spur (101) bedeckende Isolierhülle (102) und eine Vielzahl von elektrisch an die Spur (101) angeschlossenen Verbindern (103) aufweist;
wobei jede Spur (101) eine gewellte Form aufweist, die Täler (104, 105) und Spitzen in der radialen Ebene formt, wobei die Täler (104, 105) innere Täler (105), die sich gegenüber der Achse X befinden, und äußere Täler (104) enthalten, die sich an einem äußeren Umfang der Spur (101) befinden, wobei die Vorrichtung **dadurch gekennzeichnet ist, dass** jeder Verbinder (103) des inneren Verbindungselements (100) elektrisch in einem inneren Tal (105) der Spur (101) des inneren Verbindungselements (100) angeschlossen ist, und jeder Verbinder (103) des ersten äußeren Verbindungselements (200) elektrisch in einem äußeren Tal (104) der Spur (101) des ersten äußeren Verbindungselements (200) angeschlossen ist.

2. Vorrichtung nach Anspruch 1, **dadurch gekennzeichnet, dass** jede Spur (101) die Form eines gewellten Rings aufweist.

3. Vorrichtung nach einem der vorhergehenden Ansprüche, **dadurch gekennzeichnet, dass** die Spuren (101) gleich sind.

4. Vorrichtung (300) nach einem der vorhergehenden Ansprüche, **dadurch gekennzeichnet, dass** sie aufweist:
• ein zweites äußeres Verbindungselement (200), das die Achse X umgibt und axial mit dem ersten äußeren Verbindungselement (200) gestapelt ist;
• ein drittes äußeres Verbindungselement (200), das die Achse X umgibt und axial mit dem zweiten äußeren Verbindungselement (200) gestapelt ist.

5. Vorrichtung (300) nach Anspruch 4, **dadurch gekennzeichnet, dass** die äußeren Verbindungselemente (200) gleich und winkelmäßig zueinander verschoben sind, so dass jeder Verbinder (103) eines äußeren Verbindungselements (200) sich axial gegenüber den äußeren Tälern (104) ohne Verbinder (103) der anderen äußeren Verbindungselemente (200) befindet.

6. Vorrichtung (300) nach Anspruch 4 oder 5, **dadurch gekennzeichnet, dass** jedes äußere Verbindungselement (200) einen Ausgangsverbinder (201) aufweist, der dazu bestimmt ist, mit einer elektrischen Ausrüstung, zum Beispiel einem Wandler, verbunden zu werden, und die äußeren Verbindungselemente (200) übereinander mit einer Winkelverschiebung angeordnet sind, so dass die Ausgangsverbinder (201) zueinander sich um die Winkelverschiebung beabstandet sind.

7. Rotierende elektrische Maschine, **dadurch gekennzeichnet, dass** sie aufweist:
• eine elektrische Verbindungsvorrichtung (300) nach einem der Ansprüche 4 bis 6;
• ein erstes dreiphasiges elektrisches Element, das mindestens einen ersten, einen zweiten und einen dritten elektrischen Phaseneingang aufweist;
• einen Stator (400), der mit einer mehrphasigen Wicklung versehen ist, die mindestens eine erste, eine zweite und eine dritte Einheit von Spulen aufweist, wobei jede Einheit von Spulen Spulen enthält, wobei jede Spule einen Eingang (301) und einen Ausgang (302) aufweist,
und dass die Spur (101) des ersten, zweiten und dritten äußeren Verbindungselements (200) elektrisch an den ersten, zweiten bzw. dritten elektrischen Phaseneingang angeschlossen ist, und dass die ersten, zweiten, dritten Einheiten von Spulen je mindestens eine entsprechende Spule enthalten, deren Eingang elektrisch an die Spur (101) des ersten, zweiten bzw. dritten äußeren Verbindungselements (200) über einen Verbinder (103) des äußeren Verbindungselements (200) angeschlossen ist.

8. Rotierende elektrische Maschine nach Anspruch 7, **dadurch gekennzeichnet, dass** der Ausgang (302) mindestens einer Spule jeder Einheit von Spulen elektrisch an die Spur (101) des inneren Verbindungselements (100) über einen Verbinder (103) des inneren Verbindungselements (100) angeschlossen ist.

9. Rotierende elektrische Maschine nach Anspruch 7 oder 8, **dadurch gekennzeichnet, dass** das dreiphasige elektrische Element außerdem einen Wandler aufweist, der die Funktion eines Gleichrichter-Wechselrichters erfüllt, wobei der Wandler einen ersten, einen zweiten und einen dritten Port aufweist, der elektrisch je mit der Spur (101) des ersten, zweiten und dritten äußeren Verbindungselement (200) über den ersten, zweiten bzw. dritten Phaseneingang verbunden ist.

10. Rotierende elektrische Maschine nach einem der Ansprüche 7 bis 9 und Anspruch 6, **dadurch gekennzeichnet, dass** jeder der Phaseneingänge elektrisch mit der entsprechenden Spur (101) über den Ausgangsverbinder (201) des entsprechenden äußeren Verbindungselements (200) verbunden ist.

## Claims

1. Electrical connection device comprising:
• an internal connection member (100) surrounding an axis X comprising a frame (101), an insulating envelope (102) covering at least one radial surface of the frame (101) and a plurality of connectors (103) which are able to conduct an electric current and are electrically connected to the frame (101); and
• a first external connection member (200) surrounding the axis X and axially stacked with the internal connection member (100), the first external connection member (200) comprising a frame (101), an insulating envelope (102) covering at least one radial surface of the frame (101) and a plurality of connectors (103) which are electrically connected to the frame (101);
each frame (101) having a wavy shape forming troughs (104, 105) and crests in the radial plane, the troughs (104, 105) comprising internal troughs (105) located opposite the axis X and external troughs (104) located on an external periphery of the frame (101),
the device being **characterized in that** each connector (103) of the internal connection member (100) is electrically connected in an internal trough (105) of the frame (101) of the internal connection member (100) and each connector (103) of the first external connection member (200) is electrically connected in an external trough (104) of the frame (101) of the first external connection member (200) .

2. Device according to Claim 1, **characterized in that** each frame (101) has a wavy ring shape.

3. Device according to either one of the preceding claims, **characterized in that** the frames (101) are identical.

4. Device (300) according to any one of the preceding claims, **characterized in that** it comprises:
• a second external connection member (200) surrounding the axis X and axially stacked with the first external connection member (200);
• a third external connection member (200) surrounding the axis X and axially stacked with the second external connection member (200).

5. Device (300) according to Claim 4, **characterized in that** the external connection members (200) are identical and angularly offset from one another so that each connector (103) of an external connection member (200) is located axially opposite those external troughs (104) of the other external connection members (200) which are free of connectors (103).

6. Device (300) according to Claim 4 or 5, **characterized in that** each external connection member (200) comprises an output connector (201) intended to be connected to an item of electrical equipment, for example a converter, and the external connection members (200) are arranged one on top of another with an angular offset so that the output connectors (201) are separated from one another by said angular offset.

7. Rotary electric machine, **characterized in that** it comprises:
• an electrical connection device (300) according to any one of Claims 4 to 6;
• a first three-phase electrical member comprising at least one first, one second and one third electrical phase input;
• a stator (400) provided with a multiphase winding comprising at least one first, one second and one third set of coils, each set of coils comprising coils, each coil comprising an input (301) and an output (302),
and **in that** the frame (101) of the first, second and third external connection member (200) is electrically connected to the first, second and third electrical phase input, respectively, and **in that** the first, second and third sets of coils each comprise at least one corresponding coil having its input electrically connected to the frame (101) of the first, second and third external connection member (200), respectively, by means of a connector (103) of the external connection member (200).

8. Rotary electric machine according to Claim 7, **characterized in that** the output (302) of at least one coil of each set of coils is electrically connected to the frame (101) of the internal connection member (100) by means of a connector (103) of the internal connection member (100).

9. Rotary electric machine according to Claim 7 or 8, **characterized in that** the three-phase electrical member further comprises a converter performing the function of a rectifier-inverter, said converter comprising a first, a second and a third port, each electrically connected to the frame (101) of the first, second and third external connection member (200), respectively, by means of the first, second and third phase input, respectively.

10. Rotary electric machine according to one of Claims 7 to 9 and Claim 6, **characterized in that** each of the phase inputs is electrically connected to the corresponding frame (101) by means of the output connector (201) of the corresponding external connection member (200).
